# EUROPÄISCHE PATENTSCHRIFT

(11) **EP 3 414 209 B1**
(45) Veröffentlichungstag und Bekanntmachung des Hinweises auf die Patenterteilung: **02.06.2021**
(21) Anmeldenummer: 17717379.6
(22) Anmeldetag: 11.04.2017
(51) Int. Cl.: C03C 3/12, C03C 3/14, C03C 8/14, C03C 8/20, C03C 8/22, C03C 8/24, C03C 27/06, C03C 8/02, C03C 8/04

(54) **NIEDERTEMPERATUR-TELLURITGLASMISCHUNGEN FÜR VAKUUMVERDICHTUNG BEI TEMPERATUREN BIS ZU 450 °C**
LOW-TEMPERATURE TELLURITE GLASS MIXTURES FOR VACUUM COMPACTION AT TEMPERATURES UP TO 450 °C
MÉLANGES BASSE TEMPÉRATURE DE VERRE DE TELLURITE POUR L'ÉTANCHÉITÉ SOUS VIDE À DES TEMPÉRATURES JUSQU'À 450°C

(30) Priorität: 23.05.2016 DE 102016109414
(43) Veröffentlichungstag der Anmeldung: 19.12.2018
(73) Patentinhaber: Ferro GmbH, 60327 Frankfurt (DE)
(72) Erfinder: GÖDEKE, Dieter, 35037 Marburg (DE); SRIDHARAN, Srinivasan, Strongsville, OH 44136 (US)
(74) Vertreter: Reinhardt, Markus
(86) Internationale Anmeldenummer: PCT/EP2017/058595
(87) Internationale Veröffentlichungsnummer: WO 2017/202539

(56) Entgegenhaltungen:
- WO-A1-2016/050668
- US-A1- 2013 104 980
- US-A1- 2014 299 256

## Beschreibung

Die vorliegende Erfindung bezieht sich auf ein Glas, insbesondere auf ein Glas zum Fügen von Glasscheiben zur Herstellung von Vakuumisoliergläsern bei Verarbeitungstemperaturen ≤ 450 °C, auf das entsprechende Kompositglas und auf die entsprechende Glaspaste. Ferner bezieht sich die vorliegende Erfindung auf ein Vakuumisolierglas, hergestellt mit der erfindungsgemäßen Glaspaste, auf das Herstellungsverfahren davon und auf die Verwendung des erfindungsgemäßen Glases bzw. des Kompositglases und der Glaspaste.

### Stand der Technik

Gläser, die zum Verbinden von Gegenständen aus Glas-, Keramik- und Metallteilen verwendet werden, sind Gläser mit besonders niedrigen Erweichungstemperaturen. Sie werden auch als Glaslote oder Fügegläser bezeichnet. Unter dem Ausdruck "Fügen" wird das korrekte Aneinanderbringen oder Verbinden von Werkstücken durch entsprechende Verfahren (Schweißen, Walzen, Löten usw.) verstanden.

Glaslote oder Fügegläser sind im Stand der Technik umfangreich beschrieben. Insbesondere kommen Fügegläser im Halbleiterbereich, bei Hochtemperatur-Brennstoffzellen oder auch bei Anwendungen in Solarzellen zum Einsatz. Der Einsatz von Fügegläsern bei der Herstellung von Vakuumisolierglasscheiben wurde allerdings bisher kaum beschrieben.

Vakuumisoliergläser sind bekannt und auch bereits kommerziell erhältlich. Beim Vakuumisolierglas ist der Glaszwischenraum zwischen den beiden Einzelscheiben evakuiert. Bei herkömmlichem Isolierglas ist der Glaszwischenraum dagegen üblicherweise mit einem Edelgas gefüllt. Auch ist beim Vakuumisolierglas der Glaszwischenraum aufgrund der fehlenden Konvektion zwischen den beiden Einzelscheiben erheblich geringer. Die Einzelscheiben sind üblicherweise durch sogenannte Abstandshalter, die gitterartig über die Glasfläche verteilt angeordnet sind, beabstandet, damit der äußere Luftdruck die beiden Einzelscheiben nicht zusammendrücken kann und sind an den Rändern durch einen Randverbund vollumfänglich miteinander verbunden.

Vakuumisolierglasscheiben werden üblicherweise hergestellt, indem auf die erste Einzelglasscheibe Abstandshalter aufgesetzt und fixiert werden und anschließend die zweite Einzelglasscheibe aufgelegt wird. Diese weist in ihrem Randbereich eine Bohrung mit Absaugstutzen für die nachfolgende Evakuierung auf. Die Verbindung der beiden Glasscheiben entlang ihrer Ränder findet beispielsweise mittels Glaslot statt. Während tellurhaltige Gläser als Fasermaterialien und in leitfähigen Kontaktierungspasten für Solarzellen Einsatz finden, sind sie auch als optische Verstärker in Er-dotierten Faserverstärkern in sogenannten WDM (wavelength division multiplexing) im Einsatz. Im Bereich der Lotgläser und Verbindungsgläser sind sie noch weitgehend unbekannt. Insbesondere für den Einsatz zur Herstellung von Vakuumisoliergläsern sind sie nicht beschrieben.

Die Preise für Telluroxid schwanken stark, allerdings ist Telluroxid wirtschaftlich mit vertretbaren Kosten herstellbar. Die Glasfamilie besitzt herausragende Eigenschaften hinsichtlich Glasbildung und niedrigen Schmelztemperaturen, die von anderen herkömmlichen Gläsern nicht erreicht werden.

US5,188,990 beschreibt Tellur-Vanadat-Gläser für Halbleiter-Anwendungen (sog. *Cer-Dip-Packages).* Fügepartner stellen Keramiken: Aluminiumoxid dar. Die Glaszusammensetzung besteht im Wesentlichen aus TeO₂ und V₂O₅ und Oxiden, ausgewählt aus der Gruppe, die aus Nb₂O₅, ZrO₂ und ZnO, Bi₂O₃ und CuO und P₂O₅ und Ta₂O₅ besteht und ferner bis zu 10% aus Oxiden von Zink, Cadmium, Barium, Wolfram, Molybdän und Titan. Die hier beschriebenen Gläser weisen zudem kein Aluminiumoxid auf und der Ausdehnungskoeffizient liegt in einem Bereich zwischen 14-18 · 10⁻⁶/K. Der hohe Ausdehnungskoeffizient ist für eine Anwendung einer Glas/Glas-Fügung von Nachteil, da mit einem höheren Gehalt von Füllstoffen gearbeitet werden muss. Die hier verwendeten Füllstoffe, u.a. Niobpentoxid, sind zudem von Nachteil. Eine Glas / Glas-Fügung wurde nicht untersucht.

WO2013/043340A1 der Firma Guardian beschreibt hoch Vanadium-haltige Fügegläser für die Herstellung von Vakuumisolierglasscheiben. Die Hauptbestandteile sind Vanadiumoxid, Bariumoxid und Zinkoxid. Die hier verwendeten Gläser sind jedoch im Vanadium-Gehalt sehr hoch (zwischen 50-60 Gew.%) und sie enthalten keine oder nur sehr geringe Mengen an Telluroxid. Diese Gläser sind chemisch weniger resistent und anfälliger in Bezug auf Kristallisation.

Die von F. Wang et al., Materials Letters 67, 196-198 (2012**)** beschriebenen V₂O₅-B₂O₃-TeO₂-Gläser unterscheiden sich von der vorliegenden Erfindung im Gehalt von Boroxid. Die vorliegende Erfindung umfasst boroxidfreie Gläser. Zudem belegt die Studie, dass die Gläser aus dem System eine zum Teil ausgeprägte Kristallisationsneigung (unterhalb 400°C) aufweisen.

In US8,551,368B2 werden tellurhaltige Gläser für die Anwendung in Solarzellenkontaktierungspasten beschrieben. Die beschriebene Paste umfasst Silber als Hauptbestandteil, eine Glasfritte und einen organischen Träger, wobei die Glasfritte Telluroxid als netzwerkbildenden Bestandteil und ferner Wolfram- und Molybdänoxid enthält. Chemisch unterscheiden sich die hier beschriebenen Gläser durch den Gehalt an Wolframoxid (WO₃) und das Fehlen von Vanadiumpentoxid.

Die US2010/0180934A1 beschreibt eine Glaszusammensetzung mit niedrigem Erweichungspunkt für elektronische Bauteile, die im Wesentlichen frei von Blei, Bismut und Antimon ist. Der Vanadiumoxidgehalt beträgt 40-65 Gewichtsprozent und der Tellurgehalt ist mit 20-30 Gewichtsprozent relativ gering.

Die CN101164942 A offenbart ein bleifreies Telluratglas aus Telluoroxid und Vanadiumoxid, bei dem geringe Mengen an Zinkoxid oder Aluminiumoxid zugegen sein können.

US2014/008587A1 beschreibt eine leitfähige Paste, die eine Glasfritte umfasst, die Tellur als netzwerkbildenden Bestandteil in einer Menge von 35 bis 70 mol%, bezogen auf das Oxid, umfasst. Daneben ist noch Silber in einer Menge von 3 bis 40 mol%, bezogen auf das Oxid, vorhanden und auch Wolfram und Molybdän können vorhanden sein. Der Zusatz von Vanadiumoxid wird nicht erwähnt.

Die JP 2004356394A beschreibt ein Dichtungsmaterial, welches eine Glaskomponente enthält, die neben Vanadiumpentoxid und Tellurdioxid Zinkoxid bis zu 10% und geringe Mengen an Aluminiumoxid enthalten kann.

Bei den Herstellungsverfahren für Vakuumisolierglasscheiben vom Stand der Technik gibt es gewisse Grenzen. Ein Nachteil ist insbesondere die zum Teil sehr hohe Fügetemperatur.

Aktuell werden Fügetemperaturen kleiner als 400°C nur mit hoch bleihaltigen Fügegläsern erzielt, deren chemische Beständigkeit als nicht ausreichend angesehen werden kann und die aus Umweltgesichtspunkten eine globale Markteinführung behindern. Bismut-haltige Gläser scheitern in der Anwendung, da diese Gläser sehr kristallisationsempfindlich sind und sie vom Erweichungsbeginn oberhalb von 400 °C liegen. Außerdem wird Ihr Fließverhalten stark durch die Zugabe mit Füllstoffen beeinträchtigt, was die Benetzbarkeit der Gläser mit ihrem Verbundwerkstoff herabsetzt.

WO 2016/050668 beschreibt Niedertemperatur-Telluritfügegläser zum Fügen von Vakuumisolierglas und für andere Anwendungen wie MEMS-Fügen bei 420°C. Viele solcher Fügeprozesse finden nicht nur bei Atmosphärendruck statt, sondern auch bei Anwendungen unter reduziertem Druck wie leichtes Vakuum (ca. 100-600mbar), mittleres Vakuum (0,01-100 mbar) und Hochvakuum (<0,01 mbar). Dabei können in Abhängigkeit von der Glaszusammensetzung und der Dicke und des Typs an Fügematerialien vor dem Sintern größere Poren erzeugt werden, aufgrund einer Reduktion der Komponenten in Glas oder einfach durch Vergrößerung der restlichen Poren in den Fügestrukturen. Somit sind neue Herangehensweisen notwendig, um bei der Fügung unter Vakuum oberhalb der Glasübergangstemperatur Tg des Fügeglases zufriedenstellende Ergebnisse zu erzielen.

Aus diesem Grund wurde die vorliegende Erfindung fertiggestellt.

### Aufgabe

Die vorliegende Erfindung hat zum Ziel, die Porenbildung unter Vakuumbrennbedingungen zu steuern, indem eine Viskositätskontrolle des Produktglases durchgeführt wird, welches bei Fügetemperatur (bei Atmosphärendruck oder leichten Vakuumbedingungen) geschmolzen wurde und anschließend einem Vakuum oberhalb der Tg des Fügeglases ausgesetzt wird.

### Detaillierte Beschreibung der Erfindung

Zur Steuerung der Viskosität stellt die Erfindung mehrere Möglichkeiten bereit:
a) Bereitstellen eines TeO₂-V₂O₅-Glases und
b) Zugabe von Hochtemperaturgläsern und optional
c) Zugabe von reaktiven Füllern, hauptsächlich auf Oxidbasis, die zu der Fügemischung zugegeben werden.

Die oben genannte Aufgabe konnte durch die Bereitstellung eines Glases, insbesondere Fügeglases, gemäß Anspruch 1 gelöst werden.

Eine bevorzugte Ausführungsform ist es, wenn TeO₂-V₂O₅-Glas, Hochtemperaturgläser und reaktive Oxide zum Einsatz kommen:
- TeO₂-V₂O₅-Glas im Bereich von 60-100 Gew.-%,
- Hochtemperaturgläser, ausgewählt aus dem Bismutglas, im Bereich von 0,5-20 Gew.-% besteht und
- reaktive Oxide, ausgewählt aus der Gruppe, die aus Al₂O₃, Y₂O₃, La₂O₃, ZnO, Bi₂O₃, SiO₂, ZrO₂, Zircon, Nb₂O₅, V₂O₅, TeO₂, CeO₂, SnO, SnO₂, FeO, MnO, Cr₂O₃, CoO, Oxidpigmenten, oder einer Kombination davon, im Bereich von 0,5-20 Gew.-% besteht.

Das Anforderungsprofil eines Fügeglases/Komposites als Lot für Vakuumisolierglasscheiben ist wie nachfolgend:
- Fügetemperatur ≤ 400°C
- Thermischer Ausdehnungskoeffizient des Kompositglases (Fügeglas + Füllstoff)zwischen 7,5-9·10⁻⁶/ K
- Verträglichkeit mit Standardfüllstoffen: Cordierit, Beta Eukryptit, zwischen 1-25 Gew. %
- Erweichungsbeginn des Glases > 300°C (Der Erweichungsbeginn > 300°C ist notwendig, um einen ausreichenden Binderausbrand des Glases mit Standardmedien zu gewährleisten.)
- Keine Kristallisation der Gläser in Pulverform zwischen 300-420°C
- Feuchtebeständigkeit, geringe Wasserlöslichkeit
- Gute Anbindung des Glases auf Floatglas (sowohl auf Bad, als auch Luftseite),
- Verträglichkeit der Glases mit Standardlösemitteln BDG, DPM
- Verarbeitung unter Luft
- Möglichkeit der Prozessierung durch schnelle Aufheizrampen und Abkühlrampen
- bleifrei, cadmiumfrei
- Gewährleistung eines hermetischen, spannungsarmen Glas/Glasverbundes
- industrielle Verarbeitung mittels Dispensen, Digitaldrucktechnik, Siebdruck etc. möglich

Aufgrund der niedrigen Fügetemperatur können auch thermisch vorgespannte Glasscheiben gefügt werden, ohne dass sie Ihre Vorspannung verlieren. Zudem ist es durch die verhältnismäßig niedrigen Fügetemperaturen möglich, beschichtete Floatgläser zu verarbeiten, ohne dass das Coating(low-E) der Gläser Schaden nimmt. Das erleichtert einen einfacheren Aufbau, da durch die Verwendung von dünneren Scheiben Gewicht eingespart werden kann. Andere Anwendungen im Bereich der leitfähigen Glaspasten (Solarzellenanwendungen), als Zusätze für Autoglasfarben, sind ebenfalls denkbar.

Das TeO₂-V₂O₅-Glas besteht aus

| | |
|---|---|
| TeO₂ | 40-61 Gew.-%, |
| V₂O₅ | 9-40 Gew.-%, |
| Al₂O₃ | 5-20 Gew.-%. |

Ein bevorzugter Bereich liegt bei

| | |
|---|---|
| TeO₂ | 50-61 Gew.-%, |
| V₂O₅ | 20-35 Gew.-%, |
| Al₂O₃ | 10-20 Gew.-%. |

Ganz besonders bevorzugt ist der Einsatz des folgenden Glases:

| | |
|---|---|
| TeO₂ | 56,00 Gew.-%, |
| V₂O₅ | 32,00 Gew.-%, |
| Al₂O₃ | 12,00 Gew.-%. |

Das Hochtemperaturglas besteht aus Bismutglas, mit

| | |
|---|---|
| Bi₂O₃ | im Bereich von 75-85 Gew.-%, |
| ZnO | im Bereich von 9-15 Gew.-% und |
| B₂O₃ | im Bereich von 5-12 Gew.-%. |

Die reaktiven Oxide sind vorzugsweise aus der Gruppe ausgewählt, die aus Al₂O₃, Y₂O₃, La₂O₃, ZnO, Bi₂O₃, SiO₂, ZrO₂, Zircon, Nb₂O₅ oder Kombinationen davon besteht. Besonders bevorzugt sind die reaktiven Oxide aus der Gruppe ausgewählt, die aus Al₂O₃, Y₂O₃, Bi₂O₃, ZnO oder Kombinationen davon besteht.

Ein weiterer Aspekt der Erfindung ist ein Kompositglas, das neben dem erfindungsgemäßen Glas ferner einen Füllstoff umfasst.

Dieser Füllstoff liegt im Bereich zwischen 1-25 Gew.-% und wird aus Cordierit oder Eukryptit ausgewählt. Bevorzugt ist ein Füllstoffbereich von 20-25 Gew.-%.

Ferner ist Gegenstand der Erfindung eine Glaspaste, die aus dem erfindungsgemäßen Glas oder aus dem erfindungsgemäßen Kompositglas mittels eines Siebdruckmediums hergestellt wird. Bevorzugt ist es, dass die Glaspaste ein Bindemittel umfasst. Hier kommt bevorzugt ein Polypropylencarbonat zum Einsatz.

Ein weiterer Gegenstand der Erfindung ist ein Verfahren zur Herstellung eines Vakuumisolierglases. Bei dem hier dargestellten Verfahren wird das erfindungsgemäße Glaslot in Form einer Paste verwendet, was allerdings nur beispielhaft dargestellt werden soll. Alternativ können auch das Glaslot selbst bzw. das Kompositmaterial zur Herstellung eines Vakuumisolierglases verwendet werden.

Das Verfahren zeichnet sich durch die folgenden Schritte aus:
- Aufbringen der Glaspaste nach den Ansprüchen 8-9 auf ein Glassubstrat,
- Trocknen der Paste auf dem Glassubstrat für 10 Minuten bei 130 °C,
- Erhitzen des Glassubstrates auf eine Temperatur von 300 °C für 30-60 Minuten,
- Hochheizen auf eine Fügetemperatur von 325-390 °C für 1-5 Minuten,
- Abkühlen auf Raumtemperatur,
- Anbringen eines zweiten Glassubstrates,
- Hochheizen auf eine Fügetemperatur von 325-390 °C für 10-15 Minuten und
- Evakuieren des Glases/Glasverbunds während dem Abkühlen auf Raumtemperatur.

Ein weiterer Gegenstand der Erfindung ist das Vakuumisolierglas, welches durch das oben beschriebene Verfahren hergestellt wurde.

Das erfindungsgemäße Glaslot, das erfindungsgemäße Kompositglas und die erfindungsgemäße Glaspaste finden als Fügematerial für Glasscheiben zur Herstellung von Vakuumisoliergläsern Verwendung.

Daneben kommt eine Verwendung als Fügematerial für Solarzellenanwendungen und als Zusätze für Autoglasfarben in Betracht.

Für die Herstellung der Fügegläser können folgende Rohstoffe verwendet werden:
- Telluroxidpulver 75-80% d50= 3-10 µm
- Vanadiumpentoxid V₂O₅ 95-99%
- Calciniertes Aluminiumoxid

Die Rohstoffe werden in einem Planetenmischer, Schaufelmischer etc. gut durchmischt und in einem keramischen Tiegel, Feuerfestmaterial unter Luft bei 650- 750°C im Elektroofen geschmolzen.

Die niedrigen Schmelztemperaturen sind notwendig um eine Verdampfung des TeO₂ zu verhindern. Oxidierende Schmelzführung ist notwendig, jedoch kein O₂-Bubbling.
Das Abschrecken kann in Wasser oder wahlweise auf wassergekühlten Walzen erfolgen. Das Glas hat eine rötliche, braun schwarze Farbe. Eine Abschreckung des Glases ist aufgrund der niedrigen Viskosität des Glases auf einer Walze nicht trivial. Hier empfiehlt sich ein Guss bei Temperaturen von ca. 650°C. Um das anschließende Wiederverschmelzen des Glases untereinander zu verhindern, empfiehlt sich die Verwendung von doppelt rotierenden Walzen.

Anschließend wird die abgeschreckte Fritte in Kugelmühlen, Strahlmühlen etc. auf Korngrößen d90≤60 µm aufgemahlen. Die Einstellung des WAK erfolgt wahlweise bereits beim Mahlen durch Zugabe eines keramischen Füllstoffes oder in einem abschließenden Mischschritt.

Für die Herstellung des Glases wird das Glas mit einem Siebdruckmedium 801022 oder 801026 über einen Dreiwalzenstuhl zu einer Paste verarbeitet.

Bevorzugt kann das Glas mit einem Bindemittel aus Polypropylencarbonat (z.B. QPac 40 Binder Firma: Empower materials, USA) verarbeitet werden. Dieses Bindemittel bringt den Vorteil mit, dass es sich bereits bei Temperaturen zwischen 250-300°C zersetzt und damit ist gewährleistet, dass keine Kohlenstoffreste im Fügeglas eingeschlossen bleiben.

Die Gläser werden dann mittels eines Dispensers auf das Glassubstrat aufgetragen: h= 0,3-0,5mm, b= 4- 6mm und die Paste wird mit dem Floatglas für 10 Minuten bei 130°C getrocknet. Idealerweise wird die mit Glaslot-beschichtete Floatglasscheibe in einem Ofen mit elektrisch beheizten Infrarotelementen auf eine Temperatur von 300°C gebracht und dort für 30-60 Minuten gehalten, anschließend auf die Fügetemperatur von 325-390°C hochgeheizt, 1-5 Minuten gehalten und wieder auf Raumtemperatur abgekühlt. In einem zweiten Prozessschritt kann die zweite Floatglasscheibe auf die vorbeschichtete Floatglasscheibe platziert und mittels Klemmen mechanisch fixiert werden. Abstandshalter zwischen den Scheiben sorgen für eine gleichmäßige Lothöhe. In dem folgenden Brennzyklus wird der Verbund direkt auf die Fügetemperatur von 325-390°C gebracht und dort für 10-15 Minuten gehalten. Abschließend wird der Verbund wieder auf Raumtemperatur abgekühlt. Mit diesem Verfahren ist gewährleistet, dass der Verbund weitgehend porenfrei ist, da der Binder vorher bei 300°C ausgebrannt wurde. Einzelne Verfahrensschritte werden bei reduziertem Atmosphärendruck wie leichtes Vakuum (ca. 100-600 mbar), mittleres Vakuum (ca. 0,1-100 mbar) und Hochvakuum (<0,01 mbar) durchgeführt, um die Porenbildung zu steuern.

Die Erfindung wird nachfolgend anhand von Beispielen beschrieben, die die Erfindung nicht einschränken.

### Ausführungsbeispiele

Es wurden Hochtemperaturgläsern, ausgewählt aus der Gruppe die aus Bleiglas, Bismutglas, Zinkglas, Bariumglas, Calciumglas, Alkalisilikatglas im Bereich von 0,5-20 Gew.-% besteht, zu den Fügeglasmischungen aus der WO 2016/050668 J z gegeben. Hier zeigte sich ein vorteilhafter Effekt bei Fügebedingungen im Vakuum

Weiterhin wurden reaktive Oxide, ausgewählt aus der Gruppe die aus Al₂O₃, Y₂O₃, La₂O₃, ZnO, Bi₂O₃, SiO₂, ZrO₂, Zircon, Nb₂O₅, V₂O₅, TeO₂, CeO₂, SnO, SnO₂, FeO, MnO, Cr₂O₃, CoO, Oxidpigmente, oder einer Kombination davon, im Bereich von 0,5-20 Gew.-% besteht, zu den Fügeglasmischungen aus der WO 2016/050668 gegeben.

Die Teilchengröße der reaktiven Oxide beträgt dabei 0,1-40 µm, vorzugsweise 0,1 bis 20 µm.

Testbedingungen: Pellettest und Fließtest sowohl bei Atmosphärendruckbrennbedingungen als auch bei Vakuumbrennbedingungen bei 400, 100, 10, 0,1 und 0,01 mbar.

Erfolgskriterien: Benetzung und Bindung an das Glassubstrat kein Schäumen bei den Pellet-Tests, wie auch bei den Querschnitten

Die Ergebnisse sind vielversprechend, es findet eine gute Bindung an das Floatglas statt. Fluss bei Temperaturen ≤ 450°C, stärker bevorzugt ≤ 420°C, kein Schäumen beim Vakuumbrennen.

Bevorzugte reaktive Oxide: Y₂O₃, ZnO, Bi₂O₃, Al₂O₃
Es können auch Mischungen der reaktiven Oxide verwendet werden.

Auch ist denkbar, nach dem Anlegen von Vakuum die Vakuumvorrichtung mit Schutzgas (N₂ oder Argon) zu befüllen, um bestimmte Komponenten während dem Fügeprozess zu schützen.

Im nachfolgenden werden zwei Beispiele konkret beschrieben.

### Beispiel 1: Zusatz von verschiedenen Mengen eines Bismut-haltigen Glases zu einem Tellur-Vanadiumglas

Zu TDF9533a wurden 5% Gew.-% bzw. 10 Gew.-% EG9824 gegeben. (TDF9533a, Zusammensetzung TeO₂ 56,00 Gew.-%, V₂O₅ 32,00 Gew.-% und Al₂O₃ 12,00 Gew.-%, EG9824A7: Bi₂O₃-ZnO-B₂O₃-Glas). Aus Tabelle 1 erkennt man deutlich die Erhöhung des Erweichungspunktes und der jeweiligen Temperaturen bei steigender Konzentration von EG9824.

**Tabelle 1:**

| Erhitzungsmikroskopie | TDF9533a | TDF9533a | TDF9533a |
|---|---|---|---|
| Zusatz Bi-Glas | | | |
| Wt.-% | 0 | 5 | 10 |
| Vol.-% | 0 | 2,9 | 6 |
| Erweichungspunkt (°C) | 352 | 352 | 372 |
| Sphärischtemperatur (°C) | 377 | 386 | 413 |
| Halbkugeltemperatur (°C) | 435 | 452 | 505 |
| Fließtemperatur (°C) | 920 | 985 | 992 |

### Beispiel 2: Zusatz von verschiedenen Mengen Al₂O₃ zu einem Tellur-Vanadiumglas

**Tabelle 2:**

| Erhitzungsmikroskopie | TDF9533a | TDF9533a | TDF9533a |
|---|---|---|---|
| Zusatz Al₂O₃ | | | |
| Wt.-% | 0 | 5 | 10 |
| Vol.-% | 0 | 5,6 | 11,2 |
| Erweichungspunkt (°C) | 323 | 346 | 369 |
| Sphärischtemperatur (°C) | 335 | 378 | 400 |
| Halbkugeltemperatur (°C) | 397 | 433 | 475 |
| Fließtemperatur (°C) | 426 | 499 | >1350 |

### Beispiel 3 Zusatz von verschiedenen Mengen SiO₂ zu einem Tellur-Vanadiumglas

**Tabelle 3:**

| Erhitzungsmikroskopie | TDF9533a | TDF9533a | TDF9533a | TDF9533a |
|---|---|---|---|---|
| Zusatz SiO₂ | | | | |
| Wt.-% | 0 | 5 | 10 | 20 |
| Vol.-% | 0 | 9,1 | 17,5 | 32,3 |
| Erweichungspunkt (°C) | 323 | 352 | 357 | 412 |
| Sphärischtemperatur (°C) | 335 | 387 | 436 | |
| Halbkugeltemperatur (°C) | 397 | 447 | | |
| Fließtemperatur (°C) | 426 | 1010 | >1350 | >1350 |

Wenn in der Tabelle keine Angaben sind, wird die Temperatur nicht erreicht.
Die Änderungen des Erweichungspunktes, Spärischtemperatur bei Vol.-% 0 liegen an der Verwendung unterschiedlicher Partikelgrößen des Cordierit-Füllstoffes. Als geeignet hat sich eine Partikelgröße von Cordierit von d50 ca. 20 µm erwiesen.

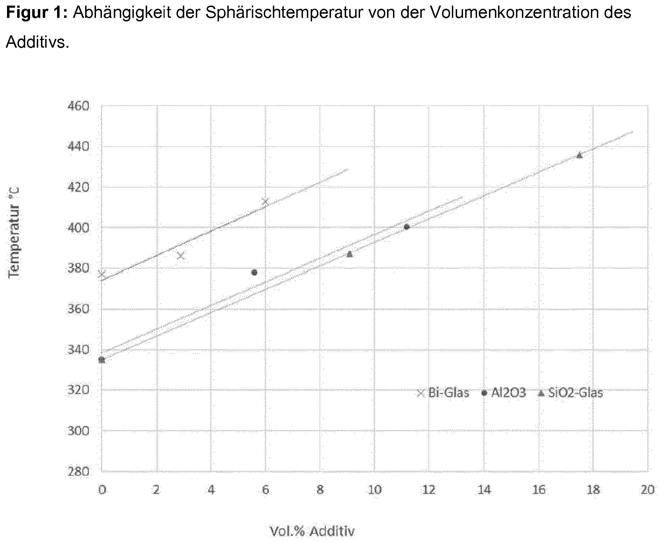

Figur 1 zeigt die Abhängigkeit der Sphärischtemperatur von der Volumenkonzentration des Additivs.

## Patentansprüche

1. Glas, insbesondere Fügeglas, umfassend die nachfolgenden Komponenten in Gew.-%:
- TeO₂-V₂O₅-Glas im Bereich von 60-100 Gew.-%, wobei das TeO₂-V₂O₅-Glas aus
| | |
|---|---|
| TeO₂ | 40-61 Gew.-%, |
| V₂O₅ | 9-40 Gew.-%, |
| Al₂O₃ | 5-20 Gew.-% |
besteht,
- Hochtemperaturglas, ausgewählt aus Bismutglas, im Bereich von > 0-20 Gew.-%,
wobei das Hochtemperaturglas aus
| | |
|---|---|
| Bi₂O₃ | im Bereich von 75-85 Gew.-%, |
| ZnO | im Bereich von 8-15 Gew.-% und |
| B₂O₃ | im Bereich von 5-12 Gew.-% |
besteht und
- reaktive Oxide, ausgewählt aus der Gruppe, die aus Al₂O₃, Y₂O₃, La₂O₃, ZnO, Bi₂O₃, SiO₂, ZrO₂, Zircon, Nb₂O₅, V₂O₅, TeO₂, CeO₂, SnO, SnO₂, FeO, MnO, Cr₂O₃, CoO, Oxidpigmenten, oder einer Kombination davon, im Bereich von 0-20 Gew.-% besteht.

2. Glas nach Anspruch 1, wobei das TeO₂-V₂O₅-Glas aus
| | |
|---|---|
| TeO₂ | 50-61 Gew.-%, |
| V₂O₅ | 20-35 Gew.-%, |
| Al₂O₃ | 10-20 Gew.-% |
besteht.

3. Kompositglas, **dadurch gekennzeichnet, dass** es das Glas nach den Ansprüchen 1-2 und ferner einen Füllstoff umfasst.

4. Kompositglas nach Anspruch 3, **dadurch gekennzeichnet, dass** der Füllstoff im Bereich zwischen 1-25 Gew.-% liegt.

5. Kompositglas nach den Ansprüchen 3-4, **dadurch gekennzeichnet, dass** der Füllstoff aus Cordierit oder Eukryptit ausgewählt wird.

6. Glaspaste, hergestellt aus dem Glas nach den Ansprüchen 1-2 oder aus dem Kompositglas nach den Ansprüchen 3-5 mittels eines Siebdruckmediums.

7. Glaspaste nach Anspruch 6, umfassend ferner ein Bindemittel.

8. Verfahren zur Herstellung eines Vakuumisolierglases, **gekennzeichnet durch** die folgenden Schritte:
- Aufbringen der Glaspaste nach den Ansprüchen 6-7 auf ein Glassubstrat,
- Trocknen der Paste auf dem Glassubstrat für 10 Minuten bei 130 °C,
- Erhitzen des Glassubstrates auf eine Temperatur von 300 °C für 30-60 Minuten,
- Hochheizen auf eine Fügetemperatur von 325-390 °C für 1-5 Minuten,
- Abkühlen auf Raumtemperatur,
- Anbringen eines zweiten Glassubstrates,
- Hochheizen auf eine Fügetemperatur von 325-390 °C für 10-15 Minuten und
- Evakuieren des Glases/Glasverbunds während dem Abkühlen auf Raumtemperatur.

9. Verfahren nach Anspruch 8, wobei einzelne Verfahrensschritte bei reduziertem Atmosphärendruck wie leichtes Vakuum (ca. 100-600 mbar), mittleres Vakuum (ca. 0,1-100 mbar) und Hochvakuum (<0,01mbar) durchgeführt werden.

10. Vakuumisolierglas, hergestellt nach dem Verfahren nach den Ansprüchen 8-9.

11. Verwendung des Glases nach den Ansprüchen 1-2 oder des Kompositglases nach den Ansprüchen 3-5 oder der Glaspaste nach den Ansprüchen 6-7 als Fügematerial für Glasscheiben zur Herstellung von Vakuumisoliergläsern.

12. Verwendung des Glases nach den Ansprüchen 1-2 oder des Kompositglases nach den Ansprüchen 3-5 oder der Glaspaste nach den Ansprüchen 6-7 als Fügematerial für Solarzellenanwendungen und als Zusätze für Autoglasfarben.

## Claims

1. Glass, in particular joining glass, comprising the following components in wt.%:
- TeO₂-V₂O₅ glass in the range of 60-100 wt.%, wherein the TeO₂-V₂O₅ glass consists of
| | |
|---|---|
| TeO₂ | 40-61 Gew.-%, |
| V₂O₅ | 9-40 Gew.-%, |
| Al₂O₃ | 5-20 Gew.-% |
- high temperature glass, selected from bismuth glass, in the range of >0-20 wt.%, wherein the high temperature glass consists of
| | |
|---|---|
| Bi₂O₃ | in the range of 75-85 wt.%, |
| ZnO | in the range of 8-15 wt.% and |
| B₂O₃ | in the range of 5-12 wt.% |
and
- reactive oxides selected from the group consisting of Al₂O₃, Y₂O₃, La₂O₃, ZnO, Bi₂O₃, SiO₂, ZrO₂, zircon, Nb₂O₅, V₂O₅, TeO₂, CeO₂, SnO, SnO₂, FeO, MnO, Cr₂O₃, CoO, oxide pigments, or a combination thereof, in the range of 0-20 wt.%.

2. Glass according to claim 1, wherein the TeO₂-V₂O₅ glass consists of
| | |
|---|---|
| TeO₂ | 50-61 wt.%, |
| V₂O₅ | 20-35 wt.%, |
| Al₂O₃ | 10-20 wt.%. |

3. Composite glass, **characterized in that** it comprises the glass according to claims 1-2 and further comprises a filler.

4. Composite glass according to claim 3, **characterized in that** the filler is in the range between 1-25 wt.%.

5. Composite glass according to claims 3-4, **characterized in that** the filler is selected from cordierite or eucryptite.

6. Glass paste made from the glass according to claims 1-2 or from the composite glass according to claims 3-5 by means of a screen-printing medium.

7. Glass paste according to claim 6, further comprising a binder.

8. Method for producing vacuum insulated glass, **characterized by** the following steps:
- applying the glass paste according to claims 6-7 to a glass substrate,
- drying the paste on the glass substrate for 10 minutes at 130°C,
- heating the glass substrate to a temperature of 300°C for 30-60 minutes,
- heating to a joining temperature of 325-390°C for 1-5 minutes,
- cooling to room temperature,
- attaching a second glass substrate,
- heating to a joining temperature of 325-390°C for 10-15 minutes and
- evacuating the glass/glass composite while cooling to room temperature.

9. Method according to claim 8, wherein individual method steps are carried out at reduced atmospheric pressure, such as a slight vacuum (approx. 100-600 mbar), a medium vacuum (approx. 0.1-100 mbar) and a high vacuum (<0.01 mbar).

10. Vacuum insulated glass produced by the method according to claims 8-9.

11. Use of the glass according to claims 1-2 or the composite glass according to claims 3-5 or the glass paste according to claims 6-7 as joining material for glass panes for producing vacuum insulated glasses.

12. Use of the glass according to claims 1-2 or the composite glass according to claims 3-5 or the glass paste according to claims 6-7 as joining material for solar cell applications and as additives for automotive glass paints.

## Revendications

1. Verre, en particulier verre d'assemblage, comportant les composants suivants en % en poids :
- verre de TeO₂-V₂O₅ dans la plage de 60-100 % en poids, le verre de TeO₂-V₂O₅ comprenant :
| | |
|---|---|
| TeO₂ | 40-61 % en poids, |
| V₂O₅ | 9-40 % en poids, |
| Al₂O₃ | 5-20 % en poids, |
- verre haute température, choisi parmi un verre de bismuth, dans la plage de >0-20 % en poids, le verre haute température comprenant :
| | |
|---|---|
| Bi₂O₃ | dans la plage de 75-85 % en poids, |
| ZnO | dans la plage de 8-15 % en poids et |
| B₂O₃ | dans la plage de 5-12 % en poids |
Et
- oxydes réactifs, choisis dans le groupe constitué par Al₂O₃, Y₂O₃, La₂O₃, ZnO, Bi₂O₃, SiO₂, ZrO₂, zircon, Nb₂O₅, V₂O₅, TeO₂, CeO₂, SnO, SnO₂, FeO, MnO, Cr₂O₃, CoO, pigments d'oxydes ou une combinaison de ceux-ci, dans la plage de 0-20 % en poids.

2. Verre selon la revendication 1, dans lequel le verre de TeO₂-V₂O₅ comprend :
| | |
|---|---|
| TeO₂ | 50-61 % en poids, |
| V₂O₅ | 20-35 % en poids, |
| Al₂O₃ | 10-20 % en poids. |

3. Verre composite, **caractérisé par le fait qu'**il comporte le verre selon l'une des revendications 1 et 2 et en outre une charge.

4. Verre composite selon la revendication 3, **caractérisé par le fait que** la charge se situe dans la plage de 1-25 % en poids.

5. Verre composite selon l'une des revendications 3 et 4, **caractérisé par le fait que** la charge est choisie parmi la cordiérite ou l'eucryptite.

6. Pâte de verre, préparée à partir du verre selon l'une des revendications 1 et 2 ou à partir du verre composite selon l'une des revendications 3 à 5 au moyen d'un milieu d'impression sérigraphique.

7. Pâte de verre selon la revendication 6, comportant en outre un liant.

8. Procédé de fabrication d'un vitrage isolant sous vide, **caractérisé par** les étapes suivantes :
- appliquer la pâte de verre selon l'une des revendications 6 et 7 sur un substrat en verre ;
- sécher la pâte sur le substrat en verre pendant 10 minutes à 130 °C ;
- chauffer le substrat en verre à une température de 300 °C pendant 30-60 minutes ;
- chauffer fortement à une température d'assemblage de 325-390 °C pendant 1-5 minutes ;
- refroidir à la température ambiante ;
- appliquer un second substrat en verre ;
- chauffer fortement à une température d'assemblage de 325-390 °C pendant 10-15 minutes ; et
- mettre sous vide le vitrage/vitrage composite pendant le refroidissement à la température ambiante.

9. Procédé selon la revendication 8, dans lequel certaines étapes de procédé sont effectuées à pression atmosphérique réduite comme un léger vide (environ 100-600 mbar), un vide moyen (environ 0,1-100 mbar) et un vide poussé (<0,01 mbar).

10. Vitrage isolant sous vide, fabriqué par le procédé selon l'une des revendications 8 et 9.

11. Utilisation du verre selon l'une des revendications 1 et 2 ou du verre composite selon l'une des revendications 3 à 5 ou de la pâte de verre selon l'une des revendications 6 et 7 en tant que matériau d'assemblage pour plaques de verre pour la fabrication de vitrages isolants sous vide.

12. Utilisation du verre selon l'une des revendications 1 et 2 ou du verre composite selon l'une des revendications 3 à 5 ou de la pâte de verre selon l'une des revendications 6 et 7 en tant que matériau d'assemblage pour des applications de cellules solaires et comme additifs pour colorants pour verres automobiles.
